# EUROPEAN PATENT APPLICATION

(11) **EP 1 420 608 A1**
(43) Date of publication of application: **19.05.2004**
(21) Application number: 02292847.7
(22) Date of filing: 15.11.2002
(51) Int. Cl.: H04Q 11/00, H04J 14/02, H04L 12/46

(54) **Systems and devices for interconnected optical WDM networks utilising preassigned sub-bands**

(71) Applicant: Corvis France R&D, 22300 Lannion (FR)
(72) Inventor: Ollivier, Francois Xavier, 22300 Lannion (FR)
(74) Representative: Callon de Lamarck, Jean-Robert

(57) **Abstract**

An optical communications system (10) having a metro portion (14) and a long haul portion (12), characterized in that a first optical signal in a first pre-determined optical sub-band is transmitted from the metro portion (14) to the long haul portion (12) of the system (10) without optical-electrical-optical conversion, and a second optical signal in a second pre-determined optical sub-band is transmitted within the metro portion (14) of the system (10), wherein the second optical signal does not enter the long-haul portion (12) while in the second pre-determined optical sub-band, and wherein the first and second optical sub-bands are different.

## Description

### BACKGROUND OF THE INVENTION

WDM technology has shown its ability to reduce exponentially the transport cost of high capacity data and voice. The market has generally been segmented based on two major types of applications. The first is access/metre networks mainly deployed to provide to service providers POP (Point of Presence) to POP and Corporate to POP connectivity. These networks will generally be referred to as "metro" networks, and they are usually limited in terms of capacity and ability to transmit optical signals hundreds of miles without opto-electronic regeneration. The second application is "long haul" networks (sometimes referred to as "extended haul" and "ultra long haul", depending on the unregenerated transmission length, but generally referred to herein as "long haul") being deployed to provide connectivity between major cities across a country or a continent. The systems are optimized to transport large capacity (e.g., multiple Terabits) over long distances (e.g., more than 1000 miles). In order to improve their service velocity and to reduce the overall cost of ownership of their network, the service providers are looking for technologies and architectures that could provide end-to-end transparency between the metro and long haul. Thus far, however, this need has not been met in the marketplace.

Furthermore, the rapid emergence of new optical technologies has enabled unprecedented levels of accelerated improvements in network economics, scalability and flexibility. Recent shifts in traffic patterns (from voice to both voice and data over longer distances) coupled with the rise of new broadband and wavelength services are altering the way networks are being designed and deployed. Consequently, equipment vendors have to face the challenge of delivering "optical network solutions" instead of standalone systems. Accordingly, there is a need for a new line of opto-electronic products facilitating and lowering the cost of equipment vendors system designs, thereby allowing equipment vendors to become "optical network" solution providers.

To enable equipment vendors to respond to rapidly changing technical and economic environment of the "optical Internet" market space, there is also a need for next generation opto-electronic integrated devices which offer broadband network function in a small and scalable physical form factor. Such devices may be used to design IP/Data, Transport and Switching systems regardless of their network application in the metro or the long/ultra long haul space.

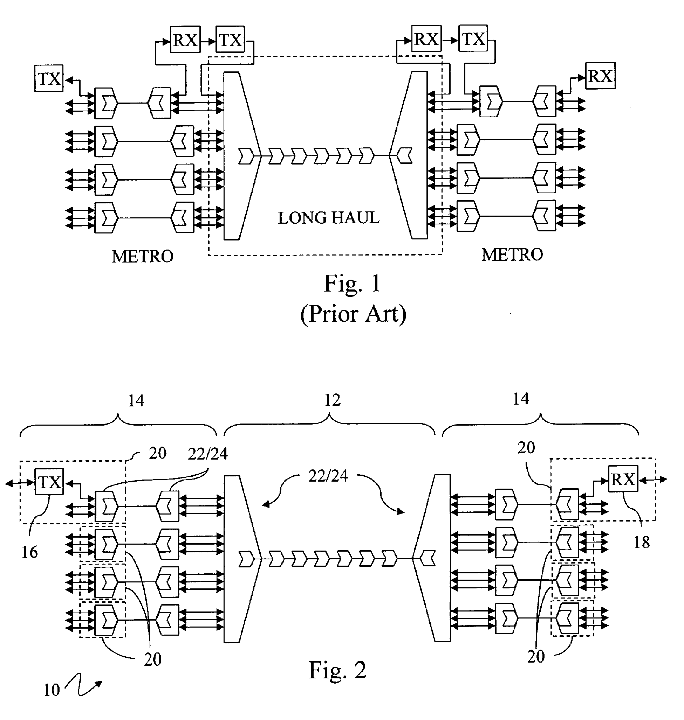

Prior art WDM systems are designed to provide full scalability from one to hundreds of optical channels on a single fiber. Those systems, however, introduce limitations into the system. For example, the system is often optimized for a given capacity and distance (mainly the C band). Also, the transmitters and receivers are typically too expensive to be used for Metro applications. In addition, metro high speed channels typically must be regenerated before being transported on the Long/Ultra Long Haul network. Furthermore, the WDM system usually cannot scale with the Wavelength modulation scheme (speed or modulation). Fig. 1 shows a typical metro/long haul network architecture. In that example, twelve Metro optical channels need to be transported between city A and city B (for clarity, only the transmitters and receivers for one unidirectional link is shown). Because of the Metro and long haul segmentation, a total of seventy-two transmitters and seventy-two receivers are needed across the network, assuming no back to back regeneration in the long haul portion of the system. One reason that so many transmitters and receivers are needed is that signals used on one portion of the system are not suitable for use in another portion, so the signals must often be must be reformatted or otherwise processed when passing between different portions (e.g., metro and long-haul) of the system. Other reasons include the need to periodically remodulate, regenerate, or wavelength convert the optical signals, in which case additional signal processing equipment (not shown) may be present between the receiver and transmitter. Such a network architecture is very expensive. Therefore, there is a need for an improved network architecture which provides lower cost, more efficient networks.

GbE and 10 GbE are available on the market, but those products are limited in distance and require the development of specific designs in order to transport GbE or 10 GbE from the source to the destination through the metro or long haul network. Furthermore, the first generation OC-192 MSA family has provided a first level of integration to the system provider, but there are not any system level features and distance and WDM capabilities are limited.

### BRIEF SUMMARY OF THE INVENTION

The present invention is directed towards optical communications devices and systems and, more particularly, to opto-electronic integrated transponders and associated systems and devices. The present invention is also directed to the use of sub-bands in transponders, devices, and associated systems. The present invention can be utilized, for example, in IP/data, transport, or switching systems regardless of whether the network is metro or long haul. The present invention may operate in WDM systems or in single channel systems. The present invention provides for reduced cost and more modular and more scalable products which can be deployed in different network architectures, which allow for the reduction of design cycle and lead time, and which allow for the use of sub-band multiplexing. The present invention allows for end-to-end transparency between Access/Metro and the Long/Ultra Long Haul networks by managing the transport in wavelength bands.

One embodiment of the present invention is an optical communications system having a metro portion and a long haul portion in which a first optical signal in a first pre-determined optical sub-band is transmitted from the metro portion to the long haul portion of the system without optical-electrical-optical conversion, and a second optical signal in a second pre-determined optical sub-band is transmitted only within the metro portion of the system, and wherein the first and second optical sub-bands are different. The second optical signal may subsequently be transmitted outside of the metro portion of the system, such as after being converted to the first optical sub-band or to another optical sub-band which is used to transmit from the metro portion to the long haul portion.

Another embodiment of the present invention may take the form of transponders or other devices which may be used in many parts of a system and may perform one or more functions, such as to provide amplification, individual channel or group pre-emphasis, dispersion compensation, etc. The transponders and other devices utilizing the present invention may be managed as a network element and may be controlled locally or remotely.

In other embodiments, the present invention may be an optical communications system, including a plurality of transmitters, a plurality of receivers, and a plurality of transponders, a first plurality of transponders correspond to a first sub-band of optical wavelengths, and a second plurality of transponders correspond to a second sub-band of optical wavelengths, wherein the first sub-band is different than the second sub-band, and wherein each transponder is an integrated device separate from each other transponder. The system may, of course, include more than two different sub-bands. The system may also include some transmitters and receivers that provide for local input/output in a metro portion and some of the transmitters and receivers that provide for remote input/output in the metro portion, and wherein at least one of the sub-bands includes signal channels for both local input/output and remote input/output.

Another embodiment of the present invention is an integrated optical network transponder having a 300 pin MSA interface, although more or different interfaces may also be utilized. The interface according to the present invention allows for migration and upgrades to the products. The transponder may have embedded system level functions controlled by software or firmware in the transponder.

Another embodiment of the present invention does not utilize a connector for electrical data signals, but instead provides a fully integrated solution. In that embodiment, for example, the device receives optical signal inputs and produce optical signal outputs, without any processing of the signals outside of the transponder.

Another embodiment of the invention is an integrated transponder which supports high speed, transparent Gbe optical inputs for transport purposes.

Another embodiment of the invention is a WDM integrated transponder which supports different reach applications.

Those and other embodiments of the present invention will be described in the following detailed description. The present invention addresses the needs described above in the description of the background of the invention by providing improved systems, apparatuses, and processes. These advantages and others will become apparent from the following detailed description.

### BRIEF DESCRIPTION OF THE DRAWINGS

Embodiments of the present invention will be described, by way of example only, with reference to the accompanying drawings, wherein:

Fig. 1 illustrates a prior art system including a metro portion and a long haul portion;

Figs. 2 and 3 illustrate embodiments of systems utilizing transponders according to the present invention; and

Fig. 4 illustrates one embodiment of sub-banding according to the present invention.

### DETAILED DESCRIPTION OF THE INVENTION

Fig. 2 illustrates one embodiment of a system 10 according to the present invention having a long haul portion 12, metro portions 14, transmitters 16, receivers 18, and integrated transponders 20. The system 10 also includes multiplexers 22 and demultiplexers 24. In some bi-directional systems, the same device may be both a multiplexer 22 and a demultiplexer 24, depending on the direction of the signal passing through it. In other embodiments, separate multiplexers 22 and demultiplexers 24 may be used.

Although the present invention will generally be described in terms of metro and long haul systems, advantages of the present invention may be realized in other system embodiments, such as between metro systems. Some embodiments of the present invention utilize different sub-bands for different types of traffic. For example, some optical wavelengths, and their corresponding sub-bands, offer longer reach than other wavelengths. By organizing the wavelengths into groups, or sub-bands, based on this or other criteria, channel plans can be developed which allow for improved performance and lower cost in systems 10. Sub-bands are described in more detail below. In this system 10, the transponders 20 utilized different sub-bands so as to reduce the number of transmitters 16 and receivers 18 required in the system 10. For example, some transponders 20 which send signals from one metro portion 14, across the long haul portion 12, and into the other metro portion 14, utilize one or more sub-bands which provide for long reach. Other transponders 20, which transmit signals over shorter distances such as within the metro portion 14, utilize different sub-bands which have shorter reach, and which often can use less expensive components. As a result, the transmitters 16 and receivers 18 at the interfaces between metro 14 and long-haul 12 portions of the system 10 can be reduced or eliminated.

The present invention allows the number of transmitters 16, receivers 18, and other O-E-O conversions to be reduced, thereby simplifying system design and providing more system transparency, such as between metro 14 and long haul 12 systems. For example, unlike the prior art illustrated in Fig. 1, additional transmitters 16 and receivers 18 do not need to be designed into the system 10 when signals pass between the long haul 12 and metro 14 portions of the system 10. As a result, only twenty-four transmitters 16 and twenty-four receivers 18 would be needed for the application described above with respect to Fig. 1, resulting in a 67% savings in terms of number of transmitters and receivers. For clarity, only transmitters 16 and receivers 18 for one unidirectional link is shown. The transponders may perform some form of electrical and/or optical processing, such as retiming, reshaping, regeneration, or wavelength conversion, which may include one or more optical-electrical-optical ("O-E-O") conversions between receiving optical signals and retransmitting the signals, or the transponders may be all-optical and perform no O-E-O conversions.

In one embodiment, the transponder 20 integrates optical signal interfaces and signal processing electronics into a single module or assembly. In particular, the transponder 20 may include optical to electrical converters for converting received signal wavelengths into electrical signals, signal processing electronics for processing the signals, and electrical to optical converters for converting the processed signals back into optical signals. By integrating these functions into a self-contained module, the transponder further simplifies system design by reducing or eliminating the need for electrical regeneration and signal processing to be integrated with other system and control functions and designed into the system 10. In other embodiments, conventional transmitters 16, receivers 18, and other devices may be used with the sub-bands of the present invention.

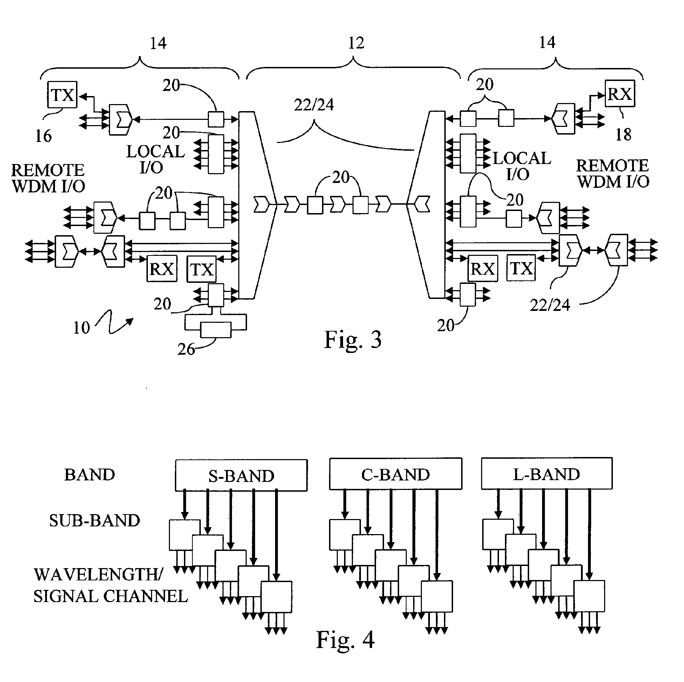

The transponder 20 may also include embedded functionality, such as to provide a system interface which may, for example, be locally or remotely controlled, such as through a network management system. For example, the transponder 20 may regenerate optical signals, or the transponder 20 may perform other, more sophisticated data processing. The transponder 20 may be uni-directional or bi-directional. The transponder 20 may be partially or completely integrated and, for example, may have one or more optical input/output associated with an interface, such as a 300 pin MSA connector, or other optical or electrical interfaces. The connector may be used, for example, to allow additional flexibility with the transponder 20, such as to allow the transponder 20 to be upgraded to include new or different features or to provide additional interoperability. The interface may also be used to allow signals to be further processed outside of the transponder 20 in an external signal processing device 26 (illustrated in Fig. 3), such as for amplification, dispersion compensation, other processing which requires bulky components such as specialty fiber, or processing which uses specialty or site-specific external components. In other embodiments, the interface may be eliminated and the transponder may perform all necessary functions, thereby providing for a more integrated, more modular, and easier use within a network element. Some transponders 20 may be configured to receive a wavelength division multiplexed signal and others may be configured to receive one or more individual or demultiplexed signals.

The transponders 20 may support one or more different data formats and modulation schemes, such as GbE, OC-12, OC-48, OC-192, OC-768, Escon, Fiber Channel, and others. Although the transponders 20 have been generally described as being used to reduce O-E-O conversions with the sub-bands of the present invention, the transponders may also be used for other purposes and may be used with or without sub-bands. For example, a transponder 20 may perform O-E-O conversions after signals leave the initial transmitter 16, such as to support data formats and modulations schemes used in both metro and long haul transport, and may convert between formats and modulation schemes in different parts of the system. Alternatively, a transponder 20 may support only one format or modulation scheme, and different transponders 20 supporting different formats and modulation schemes can be used at appropriate locations throughout the system. In one embodiment, the transponder 20 can receive multiple optical inputs which can be mapped onto a higher speed format, such as OC-192, OC-768, or others. In other embodiments, such as in the middle of the long haul portion 12 of a system, the transponder 20 may or may not change the format or modulation scheme, depending on the system configuration. In another embodiment, the transponder 20 may be used at or near the interface between metro 14 and long-haul 12 portions, such as to convert a metro format or scheme into a long haul format or scheme, or vice versa. In other embodiments the transponder 20 may perform one or more other functions, such as forward error correction encoding and decoding, SDH/SONET encoding, decoding, and performance monitoring, individual or multiple channel pre-emphasis, amplification, dispersion compensation, wavelength conversion, remodulating, regenerating, retiming, filtering, reshaping, or other signal processing. Other embodiments, utilizing more or less inputs, outputs, functions, data rates, and other variations may be used. By using a combination of different transponder types, many different types of systems 10 may be designed.

In Fig. 2 each of the transponders 20 is shown being used with three channels. However, the transponders 20 may be used with more or less channels and may be used with or without sub-bands, as described in more detail below. Furthermore, transponders 20 are shown only in the metro 14 portions of the system 10, although more or less transponders 20 utilized at the same or different locations may be used depending, for example, on the system 10 configuration and the desired performance. For example, additional transponders 20 within the metro 14 and long-haul 12 portions may be used for signal amplification and the transponders 20 at the interfaces between the metro 14 and long-haul 12 portions may be used for wavelength conversion, format conversion, signal aggregation, or other signal processing. In other embodiments, such signal processing may be performed within the metro 14 and long-haul 12 portions, either with or separate from signal amplification, and the transponders 20 at the interfaces may be used for signal amplification or eliminated. Many other variations are also possible, and the number, type, and placement of transponders 20 will depend on the system 10 and the desired performance.

Fig. 3 illustrates another embodiment of the present invention in which both local and remote input and output is present in the metro portions 14 of the system 10. In that embodiment, some transponders 20 process both local and remote traffic while some transponders 20 process only one type of traffic. Although transponders 20 have been described in terms of eliminating additional transmitters 16 and receivers 18, transponders 20 (or other devices using the sub-band structure described below) according to the present invention may also be used in more conventional system architectures, such as that illustrated in Fig. 1. Furthermore, although the sub-banding will be generally described in terms of transponders 20, advantages of the present invention may be realized with other devices, such as amplifiers, switches, wavelength converter, format converters, etc., as well as systems 10 using such devices. For example, sub-band amplifiers may be used within metro 14 or long-haul 12 portions, or signals can be processed in other ways such as traffic aggregation, wavelength conversion, pre-emphasis, dispersion compensation, etc., within the metro 14 and long-haul 12 portions. Signal processing may be done on individual signal channels or on groups of channels (e.g., sub-bands of channels). In other embodiments, devices such as switches may be sub-banded to allow for the same scalability, modularity, and other advantages of the present invention. The use of sub-bands allows for improved performance, such as increased modularity and scalability.

The system illustrated in Fig. 3 uses sub-band devices 20 not only between metro 14 and long-haul 12 portions of the system 10, but also within metro 14 and long-haul 12 portions, although this is not required. For example, signals may be transmitted and received entirely within a metro portion 14 of the system, in a sub-band designated for use only within the metro portion 14, such as when the sender and receiver are both served by the same metro portion 14. In another example, signals may initially use a sub-band limited to the metro portion 14, and then be moved to an optical channel in a sub-band for transmission across a long haul portion 12 or some other portion of the system 10. Such conversion of signals from one sub-band to another may be performed at various places, such as aggregation points where several signals come together and are multiplexed onto one or more channels.

The transponders 20 and other devices may be controlled locally or remotely, such as via a network management system. The transponders 20 or other devices may be controlled as network elements or they may be controlled through other network elements or through local controllers..

Fig. 4 illustrates one embodiment of the sub-band architecture possible with the present invention. In that embodiment, each of the S-band, C-band, and L-band are further divided into sub-bands. The sub-bands may be organized based on optical signal reach, based on dispersion, or based on other characteristics. The specific wavelengths in each sub-band, the number of wavelengths in each sub-band, the number of sub-bands in each band, and other sub-band characteristics may be standardized or they may vary between systems. In general, the more wavelengths in a sub-band, the lower the per-wavelength cost. However, as the number of wavelengths per sub-band increases, the incremental cost of adding capacity also increases. The optimal sub-band characteristics will depend on the particular application. In some embodiment, the sub-bands are uniform, and on other embodiments the characteristics of the sub-bands can vary, such as having different capacities, different numbers of wavelengths, different spacings, etc. Although Fig. 4 illustrates the S-band, C-band, and L-band, all three bands do not need to be used to realize advantages of the present invention. Furthermore, although sub-bands may be used across the entire signal band, sub-bands may also be utilized in only a portion of the signal band, while the remainder of the band or bands may not utilize sub-bands. As a result, each signal channel may be in only one sub-band, or the same signal channel may be in more than one sub-band.

The transponders 20, as well as other devices, may utilize sub-bands, thereby allowing for more cost-effective modularity and scalability. In particular, a transponder 20 may be designed so that it only operates on signal wavelengths within a single sub-band. As a result, the transponder 20 will be less expensive than comparable transponders which operate over the entire signal band or bands, thereby resulting in lowered initial costs. Furthermore, expansion of the system can be easily accommodated with additional transponders which correspond to additional sub-bands, thereby providing for modularity and ease of upgrades to the system. The use of sub-bands may be used with transponders 20 which allow for a reduction in the number of transmitters 16 and receivers 18 in the system 10, as described above. Sub-bands, however, may also be used in more conventional systems 10, such as that illustrated in Fig. 1. For example, amplifiers, switches, add/drop multiplexers, wavelength multiplexers, wavelength demultiplexers, and other devices may be implemented with sub-bands, so as to allow the flexibility, scalability, modularity, and other advantages available with sub-banding according to the present invention.

For example, a system 10 may initially utilize signal wavelengths from only one or a small number of sub-bands. As a result, the initial system 10 may be built with devices that are specific to only that one or small number of sub-bands. As the system 10 grows and requires additional signal wavelengths which extend beyond the initial sub-bands, additional devices can be deployed to support the additional signal wavelengths. The additional devices may be co-located in the same location as the original devices, or additional devices may be located in different locations, such as to accommodate space constraints.

Sub-bands and corresponding transponders 20 or other devices can be designed to meet requirements for a system 10 so as to provide a solution which is cost-effect both initially and for subsequent expansion of the system. As a result, devices according to the present invention allow for more modularity, thereby allowing for lower costs, simplified system design, and embedded transport functions. Another advantage offered by the present invention in improved scalability because of the sub-band feature allows system capacity to be easily increased by adding additional transponders corresponding to the sub-bands which are to be added to the system.

Yet another advantage is that subsequent upgrades to the system may more easily take advantage of improved technologies. In particular, when an additional sub-band is added to a system, the new sub-banded devices may utilize improvements and upgrades that were not available when previous sub-banded devices were installed. Because of the modularity offered by sub-bands, it is not necessary to retrofit the entire system to utilize the improvements. Rather, the improved, modular sub-banded devices may be installed next to the older devices, thereby allowing the new sub-band to utilize the new technology without interrupting the previously installed sub-bands or devices. Of course, the previously installed devices may be upgraded if desired.

## Claims

1. An optical communications system having a metro portion and a long haul portion, **characterized in that**:
a first optical signal in a first pre-determined optical sub-band is transmitted from the metro portion to the long haul portion of the system without optical-electrical-optical conversion; and
a second optical signal in a second pre-determined optical sub-band is transmitted within the metro portion of the system, wherein the second optical signal does not enter the long-haul portion while in the second pre-determined optical sub-band, and wherein the first and second optical sub-bands are different.

2. The system of claim 1, wherein the system includes a second metro portion, and wherein the first optical signal is transmitted from the metro portion, through the long haul portion, and into the second metro portion without optical-electrical-optical conversion.

3. The system of claim 1, wherein no signal channels in the first sub-band are in the second sub-band.

4. The system of claim 1, wherein the second optical signal is transmitted over the long-haul portion after being converted into the first optical sub-band.

5. An optical communications system having first, second, and third portions, **characterized in that**:
a first set of optical sub-bands is used only to transmits optical signals within the first portion of the system;
a second set of optical sub-bands is used only to transmit optical signals between the first and the third portions of the system, via the second portion, without optical-electrical-optical conversion;
a third set of optical sub-bands is used only to transmit optical signal within the third portion of the system.

6. The system of claim 5, wherein each of the first and second sets of sub-bands includes one or more sub-bands, each including at least two signal channels.

7. The system of claim 5, wherein the first and third sets of sub-bands share at least one common signal channel.

8. The system of claim 5, wherein the no signal channels in the first set of sub-bands are in the third set of sub-bands.

9. The system of any of claims 5 to 8, wherein no signal channels in the second set of sub-bands are in either the first or the third sets of sub-bands.

10. An optical communications system having first and second metro portions, **characterized in that**:
a first set of optical sub-bands is used only to transmits optical signals within the first metro portion of the system;
a second set of optical sub-bands is used only to transmit optical signals between the first and the second metro portions of the system without optical-electrical-optical conversion;
a third set of optical sub-bands is used only to transmit optical signal within the second metro portion of the system, and wherein no signal channels in the second set of optical sub-bands are in either the first or third sets of optical sub-bands.

11. The system of claim 10, wherein the first and third sets of optical sub-bands are the same.

12. The system of claim 10, wherein the first and third sets of optical sub-bands are the different.

13. An optical communications system having a plurality of portions, **characterized in that**:
each portion of the system is assigned a set of sub-bands for use in transmitting optical communications signals;
a first subset of each portion's set of sub-bands is used for transmitting optical communications signals only within that portion of the system;
a second subset of each portion's set of sub-bands is shared with an adjacent portion of the system and wherein the second subset of each portion's set of sub-bands is used for transmitting optical communications signals to and from the adjacent portion of the system without an optical-electrical-optical conversion.

14. A transmitter for use in an optical communications system, **characterized in that** the transmitter is configured to transmit optical communications signals in a first sub-band from a first metro portion of the system, through a long haul portion of the system, and into a second metro portion of the system without an optical-electrical-optical conversion.

15. The transmitter of claim 14, wherein the optical communications signals pass through at least one wavelength division multiplexer when passing from the first metro portion to the long-haul portion, and wherein the optical communications signals pass through at least one wavelength division demultiplexer when passing from the long-haul portion to the second metro portion.

16. An optical communications system including a first metro portion, a long-haul portion, and a second metro portion, **characterized in that** the system includes a transmitter in the first metro portion as set forth in one of claims 15 and 16, and further comprising a receiver in the second metro portion, wherein the receiver corresponds to the transmitter and wherein optical communications signals pass from the transmitter to the receiver without optical-electrical-optical conversion.

17. The system of claim 16, further comprising at least one demultiplexer for demultiplexing an optical signal in the second metro portion and providing a demultiplexed signal to the receiver.
